# EUROPÄISCHE PATENTSCHRIFT

(11) **EP 3 729 011 B1**
(45) Veröffentlichungstag und Bekanntmachung des Hinweises auf die Patenterteilung: **30.03.2022**
(21) Anmeldenummer: 18803963.0
(22) Anmeldetag: 15.11.2018
(51) Int. Cl.: G01F 1/84

(54) **CORIOLIS-MASSENDURCHFLUSS-MESSGERÄT**
CORIOLIS MASS FLOW METER
DÉBITMÈTRE MASSIQUE CORIOLIS

(30) Priorität: 22.12.2017 DE 102017131199
(43) Veröffentlichungstag der Anmeldung: 28.10.2020
(73) Patentinhaber: Endress + Hauser Flowtec AG, 4153 Reinach (CH)
(72) Erfinder: SCHERRER, Rémy, 68960 Oberdorf (FR)
(74) Vertreter: Andres, Angelika Maria
(86) Internationale Anmeldenummer: PCT/EP2018/081334
(87) Internationale Veröffentlichungsnummer: WO 2019/120783

(56) Entgegenhaltungen:
- WO-A1-2017/069749
- DE-A1-102008 050 115
- US-A- 4 470 294
- US-A1- 2011 107 849

## Beschreibung

Die Erfindung betrifft ein Coriolis-Massendurchfluß-Meßgerät mit einen Meßwandler vom Vibrationstyp und einer daran angeschlossnenen elektronischen Umformerschaltung.

In der industriellen Meßtechnik werden - insb. auch im Zusammenhang mit der Regelung und Überwachung von automatisierten verfahrenstechnischen Prozessen - zur hochgenauen Ermittlung einer Massendurchflußrate eines in einer Prozeßleitung, beispielsweise einer Rohrleitung, strömenden Mediums, beispielsweise einer Flüssigkeiten, eines Gases oder einer Dispersion, oftmals jeweils mittels einer - zumeist mittels wenigstens eines Mikroprozessors gebildeten - Umformerschaltung sowie einem mit nämlicher Umformerschaltung elektrisch verbundenen, im Betrieb vom zu messenden Medium durchströmten Meßwandler vom Vibrationstyp gebildete Coriolis-Massendurchfluß-Meßgeräte verwendet. Beispiele für solche, ggf. zusätzlich auch als Dichte- und/oder Viskositäts-Meßgeräte ausgebildete, Coriolis-Massendurchfluß-Meßgeräte sind u.a. in der EP-A 816 807, der US-A 2002/0033043, der US-A 2006/0096390, der US-A 2007/0062309, der US-A 2007/0119264, der US-A 2008/0011101, der US-A 2008/0047362, der US-A 2008/0190195, der US-A 2008/0250871, der US-A 2010/0005887, der US-A 2010/0011882, der US-A 2010/0257943, der US-A 2011/0161017, der US-A 2011/0178738, der US-A 2011/0219872, der US-A 2011/0265580, der US-A 2011/0271756, der US-A 2012/0123705, der US-A 2013/0042700, der US-A 2016/0313162, der US-A 2017/0261474, der US-A 44 91 009, der US-A 47 56 198, der US-A 47 77 833, der US-A 48 01 897, der US-A 48 76 898, der US-A 49 96 871, der US-A 50 09 109, der US-A 52 87 754, der US-A 52 91 792, der US-A 53 49 872, der US-A 57 05 754, der US-A 57 96 010, der US-A 57 96 011, der US-A 58 04 742, der US-A 58 31 178, der US-A 59 45 609, der US-A 59 65 824, der US-A 60 06 609, der US-A 60 92 429, der US-B 62 23 605, der US-B 63 11 136, der US-B 64 77 901, der US-B 65 05 518, der US-B 65 13 393, der US-B 66 51 513, der US-B 66 66 098, der US-B 67 11 958, der US-B 68 40 109, der US-B 69 20 798, der US-B 70 17 424, der US-B 70 40 181, der US-B 70 77 014, der US-B 72 00 503, der US-B 72 16 549, der US-B 72 96 484, der US-B 73 25 462, der US-B 73 60 451, der US-B 77 92 646, der US-B 79 54 388, der US-B 83 33 120, der US-B 86 95 436, der WO-A 00/19175, der WO-A 00/34748, der WO-A 01/02816, der WO-A 01/71291, der WO-A 02/060805, der WO-A 2005/093381, der WO-A 2007/043996, der WO-A 2008/013545, der WO-A 2008/059262, der WO-A 2010/099276, der WO-A 2013/092104, der WO-A 2014/151829, der WO-A 2016/058745, der WO-A 2017/069749, der WO-A 2017/123214, der WO-A 2017/143579, der WO-A 85/05677, der WO-A 88/02853, der WO-A 89/00679, der WO-A 94/21999, der WO-A 95/03528, der WO-A 95/16897, der WO-A 95/29385, der WO-A 98/02725, der WO-A 99/40 394 oder auch der eigenen nicht vorveröffentlichten internationalen Patentanmeldung PCT/EP2017/067826 beschrieben.

Der Meßwandler eines jeden der darin gezeigten Coriolis-Massenddurchfluß-Meßgeräte umfaßt wenigstens ein zumindest abschnittsweise gerades und/oder zumindest abschnittsweise gekrümmtes, z.B. U-, V-, S-, Z- oder Ω-artig geformtes, Meßrohr mit einem von einer Rohrwand umgebenen Lumen zum Führen des Mediums.

Das wenigstens eine Meßrohr eines solchen Meßwandlers ist dafür eingerichtet, im Lumen Medium zu führen und währenddessen so vibrieren gelassen zu werden, insb. derart, daß es Nutzschwingungen, nämlich mechanische Schwingungen um eine Ruhelage mit einer auch von der Dichte des Mediums mitbestimmten, mithin als Maß für die Dichte verwendbaren Nutzfrequenz ausführt. Bei herkömmlichen Coriolis-Massendurchfluß-Meßgeräte dienen typischerweise Biegeschwingungen auf einer natürlichen Resonanzfrequenz als Nutzschwingungen, beispielsweise solche Biegeschwingungen, die einem dem Meßwandler immanenten natürlichen Biegeschwingungsgrundmode entsprechen, in dem die Schwingungen des Meßrohrs solche Resonanzschwingungen sind, die genau einen Schwingungsbauch aufweisen. Die Nutzschwingungen sind bei einem zumindest abschnittsweise gekrümmtem Meßrohr zudem typischerweise so ausgebildet, daß das nämliches Meßrohr um eine ein einlaßseitiges und ein außlaßseitiges Ende des Meßrohrs imaginär verbindenden gedachte Schwingungsachse nach Art eines an einem Ende eingespannten Auslegers pendelt, während hingegen bei Meßwandlern mit einem geraden Meßrohr die Nutzschwingungen zumeist Biegeschwingungen in einer einzigen gedachten Schwingungsebene sind. Es ist zudem bekannt, das wenigstens eine Meßrohr, beispielsweise zwecks Durchführung wiederkehrender Überprüfungen des Meßwandlers während des Betriebs des Coriolis-Massendurchfluß-Meßgeräts, gelegentlich auch zu zeitlich andauernden erzwungenen Schwingungen außer Resonanz anzuregen oder gelegentlich auch freie gedämpfte Schwingungen des wenigstens einen Meßrohrs zu ermöglichen sowie nämliche Schwingungen jeweils auszuwerten, etwa um, wie u.a. auch in der vorgenannten EP-A 816 807, US-A 2011/0178738 oder US-A 2012/0123705 beschrieben, allfällige Beschädigungen des wenigstens einen Meßrohrs möglichst frühzeitig zu detektieren, die eine unerwünschte Verringerung der Meßgenauigkeit und/oder der Betriebssicherheit des jeweiligen Coriolis-Massendurchfluß-Meßgeräts bewirken können.

Bei Meßwandlern mit zwei Meßrohren sind diese zumeist über ein sich zwischen den Meßrohren und einem einlaßseitigen Anschlußflansch erstreckenden einlaßseitig Verteilerstück sowie über ein sich zwischen den Meßrohren und einem auslaßseitigen Anschlußflansch erstreckenden auslaßseitig Verteilerstück in die jeweilige Prozeßleitung eingebunden. Bei Meßwandlern mit einem einzigen Meßrohr kommuniziert letzteres zumeist über ein einlaßseitig einmündendes Verbindungsrohr sowie über ein auslaßseitig einmündendes Verbindungsrohr mit der Prozeßleitung.

Ferner umfassen Meßwandler mit einem einzigen Meßrohr jeweils wenigstens einen einstückigen oder mehrteilig ausgeführten, beispielsweise rohr-, kasten- oder plattenförmigen, Gegenschwinger, der unter Bildung einer ersten Kopplungszone einlaßseitig an das Meßrohr gekoppelt ist und der unter Bildung einer zweiten Kopplungszone auslaßseitig an das Meßrohr gekoppelt ist, und der im Betrieb im wesentlichen ruht oder entgegengesetzt zum Meßrohr oszilliert. Das mittels Meßrohr und Gegenschwinger gebildete Innenteil des Meßwandlers ist zumeist allein mittels der zwei Verbindungsrohre, über die das Meßrohr im Betrieb mit der Prozeßleitung kommuniziert, in einem schutzgebenden Meßwandler-Gehäuse gehaltert, insb. in einer Schwingungen des Innenteil relativ zum Meßwandler-Gehäuse ermöglichenden Weise. Bei den beispielsweise in der US-A 52 91 792, der US-A 57 96 010, der US-A 59 45 609, der US-B 70 77 014, der US-A 2007/0119264, der WO-A 01/02 816 oder auch der WO-A 99/40 394 gezeigten Meßwandlern mit einem einzigen, im wesentlichen geraden Meßrohr sind letzteres und der Gegenschwinger, wie bei herkömmlichen Meßwandlern durchaus üblich, zueinander im wesentlichen koaxial ausgerichtet, indem der Gegenschwinger als im wesentlichen gerader Hohlzylinder ausgebildet und im Meßwandler so angeordnet ist, daß das Meßrohr zumindest teilweise vom Gegenschwinger ummantelt ist. Als Materialien für solche Gegenschwinger kommen, insb. auch bei Verwendung von Titan, Tantal oder Zirkonium für das Meßrohr, zumeist vergleichsweise kostengünstige Stahlsorten, wie etwa Baustahl oder Automatenstahl, zum Einsatz.

Zum aktiven Anregen bzw. Aufrechterhalten von Schwingungen des wenigstens einen Meßrohrs, nicht zuletzt auch den vorbezeichneten Nutzschwingungen, weisen Meßwandler vom Vibrationstyp des weiteren eine mittels wenigstens eines im Betrieb differenziell auf das wenigstens eine Meßrohr und den ggf. vorhandenen Gegenschwinger bzw. das ggf. vorhandene andere Meßrohr einwirkenden elektromechanischen Schwingungserreger auf. Der mittels eines Paars elektrischer Anschlußleitungen, beispielsweise inform von Anschlußdrähten und/oder inform von Leiterbahnen einer flexiblen Leiterplatte, mit der vorbezeichneten Umformerschaltung elektrisch verbundene Schwingungserreger dient im besonderen dazu, angesteuert von einem in der Umformerschaltung vorgesehenen Antriebselektronik generierten und entsprechend konditionierten, nämlich zumindest an sich verändernde Schwingungseigenschaften des wenigstens einen Meßrohrs angepaßten elektrischen Treibersignal eine mittels nämlichen Treibersignals eingespeiste elektrische Erregerleistung in eine an einem vom Schwingungserreger gebildeten Angriffspunkt auf das wenigstens eine Meßrohr wirkende Antriebskraft zu wandeln. Die Antriebselektronik ist im besonderen auch dafür eingerichtet, das Treibersignal mittels interner Regelung so einzustellen, daß es eine der anzuregenden, gelegentlich auch zeitlich ändernden Nutzfrequenz entsprechende Signalfrequenz aufweist. Das Treibersignal kann beispielsweise im Betrieb des Coriolis-Massendurchfluß-Meßgeräts gelegentlich auch abgeschaltet werden, beispielsweise zwecks Ermöglichen der vorbezeichneten freien gedämpften Schwingungen des wenigstens einen Meßrohrs oder beispielsweise, wie in der eingangs erwähnten WO-A 2017143579 vorgeschlagen, um die Antriebselektronik vor einer Überlastung zu schützen.

Schwingungserreger marktgängiger Meßwandler vom Vibrationstyp bzw. Coriolis-Massendurchfluß-Meßgeräte sind typischerweise nach Art einer nach dem elektrodynamischen Prinzip arbeitenden Schwingspule aufgebaut, nämlich mittels einer - bei Meßwandlern mit einem Meßrohr und einem daran gekoppelten Gegenschwinger zumeist an letzterem fixierten - Spule sowie einen mit der wenigstens einen Spule wechselwirkenden als Anker dienenden Permanentmagneten gebildet, der entsprechend am zu bewegenden Meßrohr fixiert ist. Der Permanentmagnet und die Spule sind dabei üblicherweise so ausgerichtet, daß sie zueinander im wesentlichen koaxial verlaufen. Zudem ist bei herkömmlichen Meßwandlern der Schwingungserreger zumeist so ausgebildet und plaziert, daß er im wesentlichen mittig an das wenigstens eine Meßrohr angreift. Alternativ zu einem eher zentral und direkt auf das Meßrohr wirkenden Schwingungserreger können, wie u.a. in der eingangs erwähnten US-A 60 92 429, beispielsweise auch mittels zweier nicht im Zentrum des Meßrohres, sondern eher ein- bzw. auslaßseitig an diesem fixierten Schwingungserreger zum aktiven Anregung mechanischer Schwingungen des wenigstens einen Meßrohrs verwendet werden oder, wie u.a. in der US-B 62 23 605 oder der US-A 55 31 126 vorgeschlagen, beispielsweise auch mittels eines zwischen dem ggf. vorhandenen Gegenschwinger und dem Meßwandler-Gehäuse wirkenden Schwingungserreger gebildete Erregeranordnungen verwendet werden.

Aufgrund der Nutzschwingungen des wenigstens einen Meßrohrs, werden - nicht zuletzt auch für den Fall, daß die Nutzschwingungen des wenigstens einen Meßrohrs Biegeschwingungen sind - im strömenden Medium bekanntlich auch von der momentanen Massendurchflußrate abhängige Corioliskräfte induziert. Diese wiederum können von der Massendurchflußrate abhängige, sich den Nutzschwingungen überlagernde Coriolisschwingungen mit Nutzfrequenz bewirken, derart, daß zwischen einlaßseitigen und auslaßseitigen Schwingungsbewegungen des die Nutzschwingungen ausführenden und zugleich vom Medium durchströmten wenigstens einen Meßrohrs eine auch von der Massedurchflußrate abhängige, mithin auch als Maß für die Massendurchflußmessung nutzbare Laufzeit- bzw. Phasendifferenz detektiert werden kann. Bei einem zumindest abschnittsweise gekrümmtem Meßrohr, bei dem für die Nutzschwingungen eine Schwingungsform, in der nämliches Meßrohr nach Art eines an einem Ende eingespannten Auslegers pendeln gelassen wird, gewählt ist, entsprechen die resultierenden Coriolisschwingungen beispielsweise jenem - gelegentlich auch als Twist-Mode bezeichneten - Biegeschwingungsmode, in dem das Meßrohr Drehschwingungen um eine senkrecht zur erwähnten gedachten Schwingungsachse ausgerichtete gedachte Drehschwingungsachse ausführt, wohingegen bei einem geraden Meßrohr, dessen Nutzschwingungen als Biegeschwingungen in einer einzigen gedachten Schwingungsebene ausgebildet sind, die Coriolisschwingungen beispielsweise als zu den Nutzschwingungen im wesentlichen koplanare Biegeschwingungen sind.

Zum Erfassen sowohl einlaßseitiger als auch auslaßseitiger Schwingungsbewegungen des wenigstens einen Meßrohrs, nicht zuletzt auch den den Nutzschwingungen entsprechenden, und zum Erzeugen wenigstens zweier von der zu messenden Massendurchflußrate beeinflußten elektrischen Schwingungsmeßsignalen weisen Meßwandler der in Rede stehenden Art desweiteren zwei oder mehr entlang des Meßrohrs voneinander beabstandete, beispielsweise jeweils mittels eines eigenen Paars elektrischer Anschlußleitungen mit eine in der vorbezeichneten Umformerschaltung elektrisch verbundenen, Schwingungssensoren auf. Jeder der Schwingungssensoren ist eingerichtet, die vorbezeichneten Schwingungsbewegungen jeweils in ein diese repräsentierendes Schwingungsmeßsignal zu wandeln, das eine Nutzsignalkomponente, nämlich eine (spektrale) Signalkomponente mit der Nutzfrequenz entsprechender Signalfrequenz enthält, und nämliches Schwingungsmeßsignal jeweils der Umformerschaltung, beispielsweise nämlich einer mittels wenigstens eines Mikroprozessors gebildeten Meß- und Steuer-Elektronik der Umformerschaltung, zur weiteren, ggf. auch digitalen Verarbeitung zur Verfügung zu stellen. Zudem sind die wenigstens zwei Schwingungssensoren so ausgestaltet und angeordnet, daß die damit generierten Schwingungsmeßsignale nicht nur, wie bereits erwähnt, jeweils eine Nutzsignalkomponente aufweisen, sondern daß zudem auch zwischen den Nutzsignalkomponenten beider Schwingungsmeßsignale eine von der Massendurchflußrate abhängige Laufzeit- bzw. Phasendifferenz meßbar ist. Basierend auf nämlicher Phasendifferenz ermittelt die Umformerschaltung bzw. deren Meß- und Steuer-Elektronik wiederkehrend die Massendurchflußrate repräsentierende Massendurchflußrate-Meßwerte. In Ergänzung zur Messung der Massendurchflußrate kann - etwa basierend auf der Nutzfrequenz und/oder auf einer für die Anregung bzw. Aufrechterhaltung der Nutzschwingungen erforderlichen elektrischen Erregerleistung bzw. einer anhand dessen ermittelten Dämpfung der Nutzschwingungen - zusätzlich auch die Dichte und/oder die Viskosität des Mediums gemessen und von der Umformerschaltung zusammen mit der gemessenen Massendurchflußrate in Form qualifizierter Meßwerte ausgegeben werden.

Untersuchungen an herkömmlichen Coriolis-Massendurchfluß-Meßgeräten haben gezeigt, daß zwischen den vorbezeichneten Nutzsignalkomponenten beider Schwingungsmeßsignale trotz gleichbleibender Massendurchflußrate gelegentlich ein ausgeprägter Phasenfehler, nämlich eine zusätzliche, gleichwohl nicht mehr vernachlässigbare Änderung der Phasendifferenz beobachtet werden kann bzw. daß die zwischen nämlichen Nutzsignalkomponenten etablierte Phasendifferenz gelegentlich eine nicht von der Massendurchflußrate abhängige flüchtige, gleichwohl nicht vernachlässigbare Störkomponente aufweisen kann. Dies u.a. in Anwendungen mit hinsichtlich der Dichte und/oder der Viskosität oder hinsichtlich einer Zusammensetzung zeitlich rasch ändernden Medien, in Anwendungen mit inhomogenen, nämlich zwei oder mehr unterschiedliche Phasen aufweisenden Medien, in Anwendungen mit zeit- bzw. taktweise fließengelassenem Medium oder auch in Anwendungen mit während der Messung gelegentlich vollzogenem Mediumswechsel auftreten, wie z.B. in Abfüllanlagen oder in Betankungsvorrichtungen. Wie u.a. auch in der eingangs erwähnten US-B 79 54 388 erörtert, kann der vorbezeichnete Phasenfehler u.a. darauf zurückzuführen sein, daß die mittels des Schwingungserregers aktiv angeregten Nutzschwingungen bezüglich einer gedachten Wirkungslinie der die Nutzschwingungen treibenden Antriebskraft asymmetrisch gedämpft sind, derart, daß die angeregten Nutzschwingungen - insb. auch bei Meßwandlern mit einem einzigen, mittig am wenigstens einen Meßrohr angreifenden Schwingungserreger - eine den Coriolisschwingungen vergleichbare Störkomponente aufweisen. Allerdings ist durch Vergleichsmessungen mit mehrerer nominell baugleichen und auch unter gleichen Meßbedingungen betriebenen Coriolis-Massendurchfluß-Meßgeräten festgestellt worden, daß der vorbezeichnete Phasenfehler, insb. besonderen auch bei rasch bzw. in einem weiten Bereich ändernder Resonanz- bzw. Nutzfrequenz, von Meßgerät zu Meßgerät in erheblichen Maße streuen kann, mithin nicht allein durch die vorbezeichnete, auf asymmetrische Dämpfungen der Nutzschwingungen zurückzuführende Störkomponente erklärbar ist.

Die DE 10 2008 050115 A1 spezifiziert ein Coriolis-Massendurchfluss-Messgerät gemäß dem Stand der Technik, bei dem mit einem periodisch veränderlichen und/oder eingeprägten Strom elektrische Erregerenergie auf ein Messrohr einwirkt.

Ausgehend vom vorbezeichneten Stand der Technik besteht eine Aufgabe der Erfindung darin, Coriolis-Massendurchfluß-Meßgeräte dahingehend zu verbessern, daß der vorbezeichneten Phasenfehler vermeiden werden kann.

Zur Lösung der Aufgabe besteht die Erfindung in einem Coriolis-Massendurchfluß-Meßgerät, umfassend: einen Meßwandler mit wenigstens einem Meßrohr, mit einer Erregeranordnung und mit einer Sensoranordnung; sowie eine sowohl mit der Erregeranordnung als auch mit der Sensoranordnung elektrisch gekoppelte, beispielsweise mittels wenigstens eines Mikroprozessors gebildete, elektronische Umformerschaltung mit einer mit der Sensoranordnung elektrisch gekoppelten Meß- und Steuerelektronik und mit einer an die Meß- und Steuerelektronik, beispielsweise nämlich elektrisch, angeschlossenen und/oder von der Meß- und Steuerelektronik angesteuerten Antriebselektronik, wobei das Meßrohr eingerichtet ist, einen zumindest zeitweise strömenden fluiden Meßstoff, beispielsweise ein Gas, eine Flüssigkeit oder eine Dispersion, zu führen und währenddessen vibrieren gelassen zu werden, wobei die Erregeranordnung eingerichtet ist, dorthin eingespeiste elektrische Leistung in erzwungene mechanische Schwingungen des wenigstens einen Meßrohrs bewirkende mechanische Leistung zu wandeln, wobei die Sensoranordnung eingerichtet ist, mechanische Schwingungen des wenigstens einen Meßrohrs zu erfassen und ein zumindest anteilig Schwingungsbewegungen des wenigstens einen Meßrohrs repräsentierendes erstes Schwingungsmeßsignal sowie wenigstens ein zumindest anteilig Schwingungsbewegungen des wenigstens einen Meßrohrs repräsentierendes zweites Schwingungsmeßsignal bereitzustellen, derart, daß das nämliche ersten und zweiten Schwingungsmeßsignale einer Änderung einer Massendurchflußrate des im Meßrohr geführten Meßstoffs mit einer Änderung einer Phasendifferenz, nämlich einer Änderung einer Differenz zwischen einem Phasenwinkel des ersten Schwingungsmeßsignals und einem Phasenwinkel des zweiten Schwingungsmeßsignals folgen. Beim erfindungsgemäßen Meßwandler ist die Antriebselektronik mit der Erregeranordnung elektrisch verbunden und zudem eingerichtet, in einem ersten Betriebsmode ein elektrisches Treibersignal zu generieren und damit elektrische Leistung in die Erregeranordnung einzuspeisen, derart, daß das wenigstens eine Meßrohr erzwungene mechanische Schwingungen mit wenigstens einer Nutzfrequenz, nämlich einer durch das elektrische Treibersignal vorgegebenen, beispielsweise nämlich einer Resonanzfrequenz des Meßwandlers entsprechenden, Schwingungsfrequenz ausführt, und in einem zweiten Betriebsmode ein Generieren des elektrischen Treibersignals auszusetzen, derart, daß währenddessen von der Antriebselektronik keine elektrische Leistung in die Erregeranordnung eingespeist wird. Darüberhinaus ist die Umformerschaltung, beispielsweise nämlich deren Meß- und Steuerelektronik und/oder deren Antriebselektronik, eingerichtet, einen Wechsel der Antriebselektronik vom ersten Betriebsmode in den zweiten Betriebsmode zu bewirken, derart, daß das wenigsten eine Meßrohr bei im zweiten Betriebsmode befindlicher Antriebselektronik zumindest während eines, beispielsweise mehr als einem Kehrwert der Nutzfrequenz entsprechenden und/oder länger als 10 ms andauernden, Meßintervalls freie gedämpfte Schwingungen ausführt und ist zudem die Meß- und Steuerelektronik eingerichtet, während des Meßintervalls die ersten und zweiten Schwingungsmeßsignale zu empfangen und auszuwerten, nämlich anhand von deren Phasendifferenz die Massendurchflußrate repräsentierende Massendurchfluß-Meßwerte zu generieren.

Desweiteren besteht die Erfindung darin, ein solches Coriolis-Massendurchfluß-Meßgerät zum Messen und/oder Überwachen eines in einer Rohrleitung zumindest zeitweise strömenden, insb. zumindest zeitweise inhomogenen und/oder zumindest zeitweise 2- oder mehrphasigen, fluiden Meßstoffs, beispielsweise eines Gases, einer Flüssigkeit oder einer Dispersion, zu verwenden.

Nach einer ersten Ausgestaltung der Erfindung ist ferner vorgesehen, daß die Sensoranordnung zum Erfassen von mechanischen Schwingungen des wenigstens einen Meßrohrs einen das erste Schwingungsmeßsignal bereitstellenden - beispielsweise elektrodynamischen - ersten Schwingungssensor sowie einen das zweite Schwingungsmeßsignal bereitstellenden - beispielsweise elektrodynamischen und/oder zum ersten Schwingungssensor baugleichen - zweiten Schwingungssensor, beispielsweise nämlich außer den ersten und zweiten Schwingungssensoren keinen weiteren Schwingungssensor, aufweist.

Nach einer zweiten Ausgestaltung der Erfindung ist ferner vorgesehen, daß die Erregeranordnung zum Anregen von Schwingungen des wenigstens eine Meßrohrs einen, beispielsweise elektrodynamischen und/oder einzigen, ersten Schwingungserreger aufweist.

Nach einer dritten Ausgestaltung der Erfindung ist ferner vorgesehen, daß die Meß- und Steuerelektronik einen ersten Analog-zu-Digital-Wandler für das erste Schwingungsmeßsignal sowie einen zweiten Analog-zu-Digital-Wandler für das zweite Schwingungsmeßsignal aufweist.

Nach einer vierten Ausgestaltung der Erfindung ist ferner vorgesehen, daß die Meß- und Steuerelektronik eingerichtet ist, basierend auf wenigstens einem der, beispielsweise bei im ersten Betriebsmode operierender Antriebselektronik erfaßten, ersten und zweiten Schwingungsmeßsignale, festzustellen, ob der im wenigstens einen Meßrohr geführte Meßstoff inhomogen ist.

Nach einer fünften Ausgestaltung der Erfindung ist ferner vorgesehen, daß die Antriebselektronik eingerichtet ist, im ersten Betriebsmode basierend auf wenigstens einer Phasendifferenz zwischen dem Treibersignal und einem der ersten und zweiten Schwingungsmeßsignale, festzustellen, ob der im wenigstens einen Meßrohr geführte Meßstoff inhomogen ist.

Nach einer sechsten Ausgestaltung der Erfindung ist ferner vorgesehen, daß die Meß- und Steuerelektronik eingerichtet ist, basierend auf einem an die Umformerschaltung angelegten Steuersignal - beispielsweise nämlich basierend auf einer damit übermittelten Nachricht, daß der im wenigstens einen Meßrohr geführte Meßstoff inhomogen ist, und/oder einem damit übermittelten Steuerkommando - einen Wechsel der Antriebselektronik vom ersten Betriebsmode in den zweiten Betriebsmode zu bewirken.

Nach einer siebenten Ausgestaltung der Erfindung ist ferner vorgesehen, daß die Umformerschaltung, beispielsweise nämlich deren Meß- und Steuerelektronik und/oder deren Antriebselektronik, eingerichtet ist, einen Wechsel der Antriebselektronik vom ersten Betriebsmode in den zweiten Betriebsmode zu bewirken, sobald der im wenigstens einen Meßrohr geführte Meßstoff als inhomogen erkannt und/oder als inhomogen vermeldet ist.

Nach einer achten Ausgestaltung der Erfindung ist ferner vorgesehen, daß die Umformerschaltung, beispielsweise nämlich deren Meß- und Steuerelektronik und/oder deren Antriebselektronik, eingerichtet ist, einen Wechsel der Antriebselektronik vom ersten Betriebsmode in den zweiten Betriebsmode zeitgesteuert zu bewirken, beispielsweise derart, daß nämlicher Wechsel zyklisch erfolgt und/oder daß die Antriebselektronik überwiegend im ersten Betriebsmode betrieben wird und/oder daß die Antriebselektronik im ersten Betriebsmode mindestens so lange betrieben wird wie im zweiten Betriebsmode.

Nach einer neunten Ausgestaltung der Erfindung ist ferner vorgesehen, daß die Umformerschaltung, beispielsweise nämlich deren Meß- und Steuerelektronik und/oder deren Antriebselektronik, eingerichtet ist, einen Wechsel der Antriebselektronik vom ersten Betriebsmode in den zweiten Betriebsmode zyklisch zu vollziehen, beispielsweise derart, daß die die Antriebselektronik innerhalb eines Zyklus mehrfach vom ersten Betriebsmode in den zweiten Betriebsmode wechselt und vice versa und/oder daß die Antriebselektronik innerhalb eines Zyklus überwiegend im ersten Betriebsmode betrieben wird und/oder daß die Antriebselektronik innerhalb eines Zyklus im ersten Betriebsmode mindestens so oft und/oder so lange betrieben wird wie im zweiten Betriebsmode.

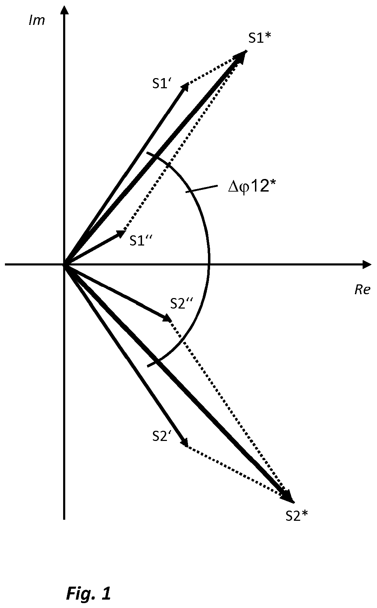

Die Erfindung beruht u.a. auf der überraschenden Erkenntnis, daß zum einen das von der Anregungselektronik generierte Treibersignal durch elektro-magnetische Kopplung - sei es innerhalb der Umformerschaltung selbst, sei es via Anschlußleitungen der Schwingungssensoren und/oder deren jeweilige Spule - jedem der beiden Schwingungsmeßsignale anteilig direkt überlagern kann, derart, daß - wie auch in Fig. 1 angedeutet, die Nutzsignalkomponente (S1*, S2*) jedes der Schwingungsmeßsignale zusätzlich zu einer von der Massendurchflußrate abhängigen, mithin für deren Messung eigentlich benötigten Meßkomponente (S1', S2') jeweils auch eine entsprechende Störkomponente (S1", S2") enthält und dementsprechend die damit jeweils ermittelte Phasendifferenz (Δϕ12*) zusätzlich auch von nämlichen Störkomponenten (S1", S2") abhängig ist, und daß zum anderen eine Amplitude und/oder eine Phasenlage der dem jeweiligen Schwingungsmeßsignal dadurch jeweils eingeprägten, gleichwohl Nutzfrequenz aufweisenden Störkomponente (S1", S2") zeitlich in unvorhersehbarer Weise ändern kann; dies im besonderen auch in der Weise, daß - wie auch in Fig. 1 angedeutet - die Amplitude und /oder die Phasenlage der Störkomponente (S1") eines der Schwingungsmeßsignale von der Amplitude bzw. Phasenlage der Störkomponente (S2") des jeweils anderen Schwingungsmeßsignals (unvorhersehbar) abweicht.

Ein Grundgedanke der Erfindung wiederum besteht darin, während des Erfassens der für die Messung der Massendurchflußrate benötigten Nutzschwingungen deren aktive Anregung auszusetzen, nämlich kein Treibersignal in die Erregeranordnung einzuspeisen, wodurch das - hier als eine Ursache für die vorbezeichneten Störkomponenten bzw. den daraus resultierenden Phasenfehler erkannte - Einkoppeln des elektrischen Anregungssignals in jedes der wenigstens zwei Schwingungssignale vermieden wird, bzw. umgekehrt für die Messung der Massendurchflußrate eine Phasendifferenz von freie gedämpfte Nutzschwingungen des wenigstens einen Meßrohrs repräsentierenden, mithin die vorbezeichnete Störkomponenten (S1" bzw. S2") nicht aufweisenden Schwingungsmeßsignalen zu verwenden.

Ein Vorteil der Erfindung ist u.a. darin zu sehen, daß auch für konventionelle Coriolis-Massendurchfluß-Meßgeräte etablierte - beispielsweise nämlich aus der eingangs erwähnten US-B 63 11 136 bekannte oder auch von der Anmelderin selbst für Coriolis-Massendurchfluß-Meßgeräte (http://www.endress.com/de/messgeraete-fuer-dieprozesstechnik/produktfinder?filter.business-area=flow&filter.measuring-principle-parameter=coriolis&filter.text=) angebotene - Umformerschaltungen prinzipiell übernommen, nämlich ggf. auch allein durch vergleichsweise geringe Modifikationen von deren jeweiliger Firmware weiterverwendet werden können.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:
- Fig. 1: ein Zeigerdiagramm für Signalkomponenten von mitttels konventioneller Coriolis-Massendurchfluß-Meßgeräte generierten Schwingungsmeßsignalen;
- Fig. 2: ein, hier als Kompakt-Meßgerät ausgebildetes, Coriolis-Massendurchfluß-Meßgerät;
- Fig. 3: schematisch nach Art eines Blockschaltbildes eine, insb. auch für ein Coriolis-Massendurchfluß-Meßgerät gemäß den Fig. 2 geeignete, Umformerschaltung mit daran angeschlossenem Meßwandler vom Vibrationtyp bzw. ein Coriolis-Massendurchfluß-Meßgerät gemäß den Fig. 2;
- Fig. 4: ein Phasor-Diagramm (Zeigerdiagramm mit ruhenden Zeigern) für Signalkomponenten von mittels eines Coriolis-Massendurchfluß-Meßgeräts gemäß Fig. 2 bzw. mittels einer an einen Meßwandler vom Vibrationstyp angeschlossenen Umformerschaltung gemäß Fig. 3 generierte Schwingungsmeßsignale.

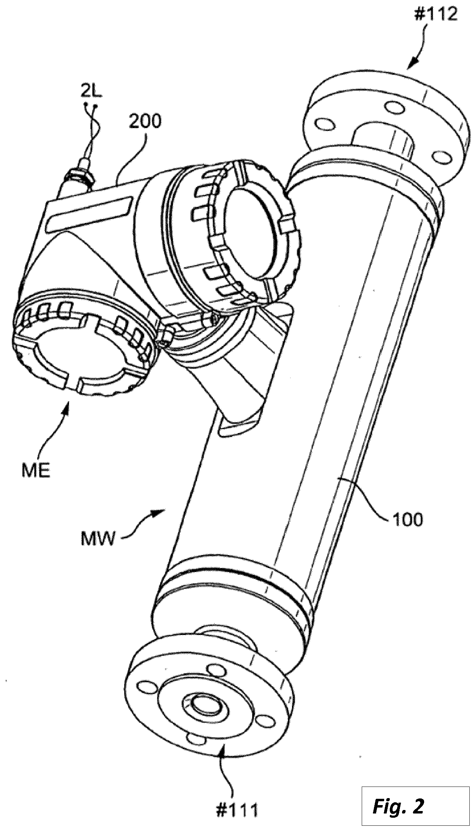

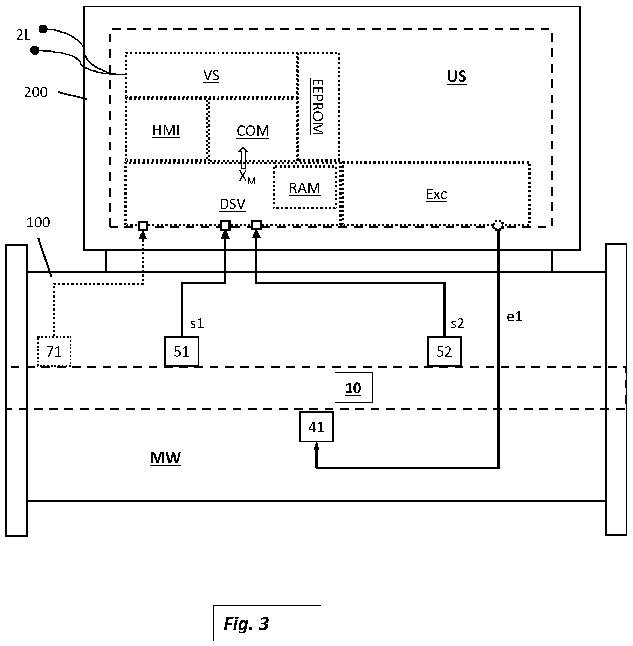

In der Fig. 2 bzw. 3 ist ein in eine (hier nicht dargestellte) Prozeßleitung - wie z.B. eine Rohrleitung einer industriellen Anlage, beispielsweise einer Abfüllanlagen oder einer Betankungsvorrichtung - einfügbares Coriolis-Massendurchfluß-Meßgerät für fließfähige, insb. fluide bzw. schüttfähige, Medien, beispielsweise nämlich auch eines zumindest zeitweise 2- oder mehrphasigen bzw. inhomogenen Meßstoffs, dargestellt. Das Coriolis-Massendurchfluß-Meßgerät dient im besonderen dem Messen und/oder Überwachen einer Massendurchflußrate m bzw. dem Ermitteln von die Massendurchflußrate repräsentierenden Massendurchfluß-Meßwerten X_{M} eines in der vorbezeichneten Prozeßleitung geführten bzw. darin zumindest zeitweise strömen gelassenen fluiden Meßstoffs, beispielsweise nämlich eines Gases, einer Flüssigkeit oder einer Dispersion. Ferner kann das Coriolis-Massendurchfluß-Meßgerät dazu dienen, zusätzlich auch eine Dichte ρ und/oder eine Viskosität η, des Meßstoffs zu ermitteln. Nach einer Ausgestaltung der Erfindung ist vorgesehen, das Coriolis-Massendurchfluß-Meßgerät zum Ermitteln von Massendurchfluß-Meßwerten eines zu transferierenden, beispielsweise nämlich mit einer vorgegebenen bzw. vorgebbaren Menge von einem Lieferanten an einen Abnehmer zu übergebenden Meßstoffs zu verwenden, beispielsweise ein verflüssigtes Gas, wie z.B. ein Methan und/oder Ethan und/oder Propan und/oder Buthan enthaltendes Flüssiggas bzw. ein verflüssigtes Erdgas (LNG) oder auch ein mittels flüssiger Kohlenwasserstoffe gebildetes Stoffgemisch, beispielsweise nämlich ein Erdöl oder ein flüssiger Kraftstoff. Das Coriolis-Massendurchfluß-Meßgerät kann dementsprechend beispielsweise auch als Bestandteil einer Übergabestelle für eichpflichtigen Güterverkehr, wie etwa einer Betankungsanlage, und/oder als ein Bestandteil einer Übergabestelle nach Art der in der erwähnten WO-A 02/060805, WO-A 2008/013545, WO-A 2010/099276, WO-A 2014/151829 oder WO-A 2016/058745 gezeigten Übergabestellen ausgebildet sein.

Das - beispielsweise zusätzlich auch als Dichte- und/oder Viskositäts-Meßgerät realisierte - Coriolis-Massendurchfluß-Meßgerät umfaßt einen über ein Einlaßende #111 sowie ein Auslaßende #112 an die Prozeßleitung angeschlossenen physikalisch-elektrischen Meßwandler MW, der dafür eingerichtet ist, im Betrieb vom Meßstoff durchströmt zu werden, sowie eine damit elektrisch gekoppelte - insb. im Betrieb mittels interner Energiespeicher und/oder von extern via Anschlußkabel mit elektrischer Energie versorgte - elektronische Umformerschaltung US.

In vorteilhafter Weise kann die, beispielsweise auch programmierbare und/oder fernparametrierbare, Umformerschaltung US ferner so ausgelegt sein, daß sie im Betrieb des Coriolis-Massendurchfluß-Meßgeräts mit einem diesem übergeordneten (hier nicht dargestellten) elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten austauschen kann, wie etwa aktuelle Meßwerte oder der Steuerung des Meßsystems dienende Einstell- und/oder Diagnosewerte. Dementsprechend kann die Umformerschaltung US beispielsweise eine solche Anschlußelektronik aufweisen, die im Betrieb von einer im vorbezeichneten Datenverarbeitungssystem vorgesehen, vom Meßsystem entfernten (zentrale) Auswerte- und Versorgungseinheit gespeist wird. Beispielsweise kann die Umformerschaltung US (bzw. deren vorbezeichnete Anschlußelektronik) so ausgebildet sein, daß sie über eine, ggf. auch als 4-20 mA-Stromschleife konfigurierte Zweileiter-Verbindung 2L mit dem externer elektronischen Datenverarbeitungssystem elektrisch verbindbar ist und darüber sowohl die für den Betrieb des Coriolis-Massendurchfluß-Meßgeräts erforderliche elektrische Leistung von der vorbezeichneten Auswerte- und Versorgungseinheit des Datenverarbeitungssystems beziehen als auch Meßwerte zum Datenverarbeitungssystem übermitteln kann, beispielsweise durch (Last-)Modulation eines von der Auswerte- und Versorgungseinheit gespeisten Versorgungsgleichstroms Versorgungsgleichstromes. Zudem kann die Umformerschaltung US auch so ausgebildet sein, daß sie nominell mit einer maximalen Leistung von 1 W oder weniger betrieben werden kann und/oder eigensicher ist.

Bei dem Meßwandler MW handelt es sich um einen Meßwandler vom Vibrationstyp, nämlich einen Meßwandler mit wenigstens einem Meßrohr 10, mit einer Erregeranordnung (41) und mit einer Sensoranordnung (51, 52), wobei das wenigstens eine Meßrohr 10 dafür eingerichtet ist, den zumindest zeitweise strömenden fluiden Meßstoff zu führen (bzw. von nämlichem Meßstoff durchströmt zu werden) und währenddessen vibrieren gelassen zu werden. Das wenigstens eine Meßrohr 10 kann - wie auch in Fig. 3 angedeutet bzw. aus einer Zusammenschau der Fig. 2 und 3 ohne weiteres ersichtlich - zusammen mit der Erregeranordnung 41 und der Sensoranordnung sowie ggf. weiteren Komponenten des Meßwandlers innerhalb eines Wandler-Gehäuses 100 untergebracht sein. Bei dem Meßwandler kann es sich beispielsweise auch um einen aus dem Stand der Technik, nicht zuletzt auch den eingangs erwähnten EP-A 816 807, US-A 2002/0033043, US-A 2006/0096390, US-A 2007/0062309, US-A 2007/0119264, US-A 2008/0011101, US-A 2008/0047362, US-A 2008/0190195, US-A 2008/0250871, US-A 2010/0005887, US-A 2010/0011882, US-A 2010/0257943, US-A 2011/0161017, US-A 2011/0178738, US-A 2011/0219872, US-A 2011/0265580, US-A 2011/0271756, US-A 2012/0123705, US-A 2013/0042700, US-A 2016/0313162, US-A 2017/0261474, US-A 44 91 009, US-A 47 56 198, US-A 47 77 833, US-A 48 01 897, US-A 48 76 898, US-A 49 96 871, US-A 50 09 109, US-A 52 87 754, US-A 52 91 792, US-A 53 49 872, US-A 57 05 754, US-A 57 96 010, US-A 57 96 011, US-A 58 04 742, US-A 58 31 178, US-A 59 45 609, US-A 59 65 824, US-A 60 06 609, US-A 60 92 429, US-B 62 23 605, US-B 63 11 136, US-B 64 77 901, US-B 65 05 518, US-B 65 13 393, US-B 66 51 513, US-B 66 66 098, US-B 67 11 958, US-B 68 40 109, US-B 69 20 798, US-B 70 17 424, US-B 70 40 181, US-B 70 77 014, US-B 72 00 503, US-B 72 16 549, US-B 72 96 484, US-B 73 25 462, US-B 73 60 451, US-B 77 92 646, US-B 79 54 388, US-B 83 33 120, US-B 86 95 436, WO-A 00/19175, WO-A 00/34748, WO-A 01/02816, WO-A 01/71291, WO-A 02/060805, WO-A 2005/093381, WO-A 2007/043996, WO-A 2008/013545, WO-A 2008/059262, WO-A 2010/099276, WO-A 2013/092104, WO-A 2014/151829, WO-A 2016/058745, WO-A 2017/069749, WO-A 2017/123214, WO-A 2017/143579, WO-A 85/05677, WO-A 88/02853, WO-A 89/00679, WO-A 94/21999, WO-A 95/03528, WO-A 95/16897, WO-A 95/29385, WO-A 98/02725, WO-A 99/40 394 oder PCT/EP2017/067826 bekannten bzw. konventionellen Meßwandler vom Vibrationstyp handeln. Die Erregeranordnung des Meßwandlers ist dementsprechend dafür eingerichtet, dorthin eingespeiste elektrische Leistung in erzwungene mechanische Schwingungen des wenigstens einen Meßrohrs bewirkende mechanische Leistung zu wandeln, während die Sensoranordnung des Meßwandlers dafür eingerichtet ist, mechanische Schwingungen des wenigstens einen Meßrohrs 10 zu erfassen und ein zumindest anteilig Schwingungsbewegungen des wenigstens einen Meßrohrs repräsentierendes erstes Schwingungsmeßsignal s1 sowie wenigstens ein zumindest anteilig Schwingungsbewegungen des wenigstens einen Meßrohrs repräsentierendes zweites Schwingungsmeßsignal s2 bereitzustellen; dies im besonderen in der Weise, daß das nämliche Schwingungsmeßsignale einer Änderung der Massendurchflußrate des im Meßrohr geführten Meßstoffs mit einer Änderung wenigstens einer Phasendifferenz Δϕ12 (Δφ12*), nämlich einer Änderung wenigstens einer Differenz zwischen einem Phasenwinkel ϕ1 des Schwingungsmeßsignals s1 (bzw. einer von dessen spektralen Signalkomponenten) und einem Phasenwinkel ϕ2 des Schwingungsmeßsignals s2 (bzw. einer von dessen spektralen Signalkomponenten) folgen. Darüberhinaus können die Schwingungsmeßsignale s1, s2 wenigstens eine von der Dichte und/oder der Viskosität des Meßstoffs abhängige Signalfrequenz und/oder Signalamplitude aufweisen. Nach einer weiteren Ausgestaltung der Erfindung weist die Sensoranordnung Erfindung einen - beispielsweise elektrodynamischen oder piezoelektrischen oder kapazitiven - einlaßseitig am wenigstens Meßrohr angebrachten bzw. in dessen Nähe angeordneten ersten Schwingungssensor 51 sowie einen - beispielsweise elektrodynamischen oder piezoelektrischen oder kapazitiven - auslaßseitig am wenigstens einen Meßrohr angebrachten bzw. in dessen Nähe angeordneten zweiten Schwingungssensors 52 auf. Wie bei Meßwandlern vom Vibrationstyp durchaus üblich bzw. auch in Fig. 3 angedeutet, können die Schwingungssensoren 51, 52 beispielsweise auch jeweils im gleichen Abstand zur Mitte des wenigstens einen Meßrohrs 10 positioniert sein. Zudem können die beiden Schwingungssensoren 51, 52 auch einzigen dem Erfassen von Schwingungen des wenigstens einen Meßrohrs 10 dienlichen Schwingungssensoren sein, derart, daß die Sensoranordnung außer nämlichen Schwingungssensoren 51, 52 keinen weiteren Schwingungssensor aufweist. Nach einer weiteren Ausgestaltung der Erfindung ist die Erregeranordnung mittels wenigstens eines elektro-mechanischen - beispielsweise nämliche einem elektrodynamischen, elektromagnetischen oder piezoelektrischen - Schwingungserregers 41 gebildet, der - wie auch in Fig. 3 angedeutet - beispielsweise mittig des wenigstens einen Meßrohrs 10 positioniert und/oder auch der einzige Schwingungen des wenigstens eine Meßrohrs bewirkende Schwingungserreger der Erregeranordnung bzw. des damit gebildeten Meßwandlers sein kann. Darüberhinaus kann im Meßwandler beispielsweise auch eine dem Erfassen von Temperaturen innerhalb der Rohranordnung dienliche Temperaturmeßanordnung 71 und/oder eine dem Erfassen von mechanischen Spannungen innerhalb der Rohranordnung dienliche Dehnungsmeßanordnung vorgesehen sein.

Zum Verarbeiten der vom Meßwandler gelieferten Schwingungsmeßsignale s1, s2 weist die Umformerschaltung US ferner eine Meß- und Steuerelektronik DSV auf. Nämliche Meß- und Steuerelektronik DSV ist, wie in Fig. 3 schematisch dargestellt, mit dem Meßwandler MW bzw. dessen Sensoranordnung 51, 52 elektrisch verbunden und dafür eingerichtet, die vorbezeichneten Schwingungsmeßsignale s1, s2 zu empfangen und auszuwerten, nämlich basierend auf den wenigstens zwei Schwingungsmeßsignalen s1, s2 die Massendurchflußrate repräsentierende - analoge und/oder digitale - Massendurchfluß-Meßwerte zu ermitteln, ggf. auch auszugeben, beispielsweise in Form von Digitalwerten. Die vom Meßwandler MW generierten und der Umformerschaltung US bzw. der darin vorgesehenen Meß- und Steuerelektronik DSV, beispielsweise via elektrischer Verbindungsleitungen, zugeführten Schwingungssmeßsignale s1, s2 können dort ggf. zunächst auch vorverarbeitet, beispielsweise nämlich vorverstärkt, gefiltert und digitalisiert werden. Nach einer weiteren Ausgestaltung der Erfindung weist die Meß- und Steuerelektronik DSV dementsprechend einen ersten Meßsignaleingang für das Schwingungungsmeßsignal s1 sowie wenigstens einen zweiten Meßsignaleingang für das Schwingungungsmeßsignal s2 auf und ist die Meß- und Steuerelektronik DSV ferner dafür eingerichtet, von nämlichen Schwingungsmeßsignalen s1, s2 die vorbezeichnete Phasendifferenz zu ermitteln. Zudem kann die Meß- und Steuerelektronik DSV auch eingerichtet sein, von wenigstens einem der anliegenden Schwingungsmeßsignale s1, s2 den jeweiligen vorbezeichnete Phasenwinkel und/oder wenigstens eine Signalfrequenz und/oder eine Signalamplitude zu ermitteln, beispielsweise nämlich im Betrieb jeweils eine Sequenz von den jeweiligen Phasenwinkel repräsentierenden digitalen Phasenwerten und/oder eine Sequenz von die Signalfrequenz repräsentierenden digitalen Frequenzwerten und/oder eine Sequenz von die Signalamplitude repräsentierenden digitalen Amplitudenwerten zu generieren. Nach einer weiteren Ausgestaltung der Erfindung weist die Meß- und Steuerelektronik DSV einen digitalen Phasenausgang sowie einen digitalen Amplitudenausgang auf. Zudem ist die Meß- und Steuerelektronik DSV ferner auch dafür eingerichtet, am Amplitudenausgang eine Amplitudenfolge, nämlich eine Folge von anhand wenigstens eines der Schwingungsmeßsignale ermittelten, beispielsweise nämlich die Signalamplitude eines der Schwingungsmeßsignale quantifizierenden, digitalen Amplitudenwerten und am Phasenausgang eine Phasenfolge, nämlich eine Folge von anhand der Schwingungsmeßsignale ermittelten digitalen Phasenwerten auszugeben.

Die Meß- und Steuerelektronik DSV kann beispielsweise auch mittels eines in der Umformerschaltung US vorgesehenen, beispielsweise mittels eines digitalen Signalprozessors DSP realisierten, Mikrocomputers und mittels in diesen entsprechend implementierter und darin ablaufender Programm-Codes realisiert sein. Die Programm-Codes können z.B. in einem nicht flüchtigen Datenspeicher EEPROM des Mikrocomputers persistent gespeichert sein und beim Starten desselben in einen, z.B. im Mikrocomputer integrierten, flüchtigen Datenspeicher RAM geladen werden. Die Schwingungsmeßsignale s1, s2 sind, wie bereits angedeutet, für eine Verarbeitung im Mikrocomputer mittels entsprechender Analog-zu-digital-Wandler (A/D-Wandler) der Meß- und Steuerelektronik DSV bzw. der damit gebildeten Umformerschaltung US in entsprechende Digitalsignale umzuwandeln, vgl. hierzu beispielsweise die eingangs erwähnten US-B 63 11 136 oder US-A 2011/0271756. Dementsprechend ist in der Meß- und Steuerelektronik nach einer weiteren Ausgestaltung ein erste Analog-zu-Digital-Wandler für das erste Schwingungsmeßsignal sowie ein zweiter Analog-zu-Digital-Wandler für das zweite Schwingungsmeßsignal vorgesehen.

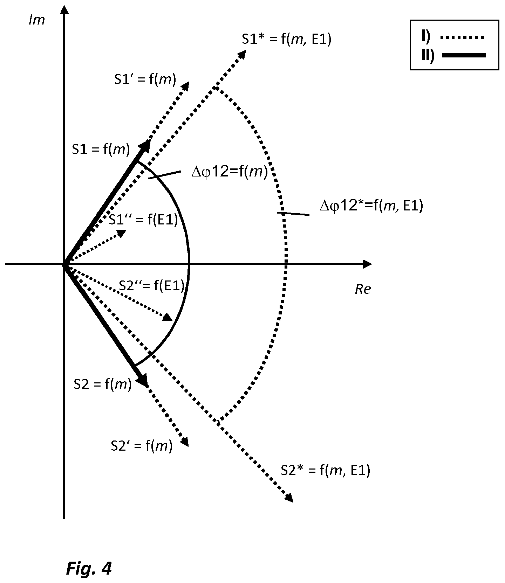

Zum Ansteuern des Meßwandlers weist die Umformerschaltung US, wie auch in Fig. 3 schematisch nach Art eines Blockschaltbildes dargestellt, ferner eine sowohl mit der Erregeranordnung elektrisch gekoppelte - beispielsweise nämlich mit der Erregeranordnung über elektrische Verbindungsleitungen verbundene - als auch mit der Meß- und Steuerelektronik DSV - beispielsweise nämlich über einen Umformerschaltung internen digitalen Bus - angeschlossene bzw. elektrisch gekoppelte Antriebselektronik Exc auf. Die Antriebselektronik Exc ist im besonderen eingerichtet, zeitweise in einem ersten Betriebsmode I betrieben zu werden und in nämlichem ersten Betriebsmode I ein - beispielsweise bipolares und/oder zumindest zeitweise periodisches, ggf. auch harmonisches - elektrisches Treibersignal e1 zu generieren und damit elektrische Leistung in die Erregeranordnung einzuspeisen, derart, daß das wenigstens eine Meßrohr - beispielsweise auch Corioliskräfte im durch das wenigstens eine Meßrohr strömenden Meßstoff bewirkende - erzwungene mechanische Schwingungen mit wenigstens einer Nutzfrequenz f_{N}, nämlich einer durch das elektrische Treibersignal e1 bzw. einer (Nutz-)Signalkomponente E1 davon vorgegebenen, insb. einer Resonanzfrequenz des Meßwandlers entsprechenden, Schwingungsfrequenz ausführt bzw. daß jedes der Schwingungsmeßsignale s1, s2 - wie auch in Fig. 4 angedeutet, jeweils eine Nutzsignalkomponente S1* bzw. S2*, nämlich eine (spektrale) Signalkomponente mit der Nutzfrequenz entsprechender Signalfrequenz enthält. Das Treibersignal e1 kann dementsprechend beispielsweise ein die vorbezeichnete, die Nutzfrequenz f_{N} bestimmenden Signalkomponente E1 bildendes harmonisches elektrisches Signal oder beispielsweise auch ein sich aus mehreren (spektrale) Signalkomponenten zusammensetzendes, gleichwohl die vorbezeichnete Signalkomponente E1 enthaltendes mehrfrequentes, ggf. auch für einen vorgebbaren Zeitraum periodisches, elektrisches Signal sein. Zum Einstellen bzw. Messen der Nutzfrequenz f_{N}, kann die Antriebselektronik, wie bei Coriolis-Massendurchfluß-Meßgerät durchaus üblich, beispielsweise eine oder mehrere Phasenregelschleifen (PLL - phase locked loop) aufweisen. Nach einer weiteren Ausgestaltung der Erfindung weist die Antriebselektronik Exc einen digitalen Frequenzausgang auf. Zudem ist die Antriebselektronik Exc ferner auch dafür eingerichtet, an nämlichem Frequenzausgang eine Frequenzfolge, nämlich eine Folge von die für das Treibersignal e1 eingestellte Signalfrequenz, beispielsweise nämlich die momentan eingestellte Nutzfrequenz (bzw. die Signalfrequenz von dessen Signalkomponente E1), quantifizierenden digitalen Frequenzwerten auszugeben. Nach einer weiteren Ausgestaltung der Erfindung ist ferner vorgesehen, daß der vorbezeichnete Phasenausgang der Meß- und Steuerelektronik DSV mit einem, beispielsweise mittels eines innerhalb der Antriebselektronik Exc vorgesehenen Phasenkomparator gebildeten, Phaseneingang elektrisch verbunden ist. Nämlicher Phasenkomparator kann beispielsweise auch dafür eingerichtet sein, eine Phasendifferenz zwischen der vorbezeichneter Signalkomponente E1 des Treibersignals e1 und wenigstens einer der vorbezeichneten Nutzkomponenten S1*, S2* festzustellen und/oder ein Ausmaß nämlicher Phasendifferenz zu ermitteln. Darüberhinaus kann der Amplitudenausgang der Meß- und Steuerelektronik DSV zudem entsprechend mit einem die Amplitude der Signalkomponente bzw. der damit angeregten Schwingungen des wenigstens einen Meßrohrs erfassenden Amplitudeneingang der Antriebselektronik Exc elektrisch verbunden sein.

Die Antriebselektronik Exc und die Meß- und Steuerelektronik DSV sowie weitere, dem Betrieb des Meßsystems dienliche Elektronik-Komponenten der Umformerschaltung US, wie etwa eine interne Energieversorgungsschaltung VS zum Bereitstellen interner Versorgungsgleichspannungen und/oder eine der Kommunikation mit einem übergeordneten Meßdatenverarbeitungssystem bzw. einem externen Feldbus dienliche Sende- und Empfangselektronik COM, können - wie auch aus einer Zusammenschau der der Fig. 2 und 3 ohne weiteres ersichtlich - ferner beispielsweise in einem entsprechenden, insb. schlag- und/oder auch explosionsfest und/oder hermetisch dicht ausgebildeten, Elektronik-Gehäuse 200 untergebracht sein. Nämliches Elektronik-Gehäuse 200 kann beispielsweise - wie auch in Fig. 2 bzw. 3 dargestellt - unter Bildung eines Coriolis-Massendurchfluß-Meßgeräts in Kompaktbauweise an vorbezeichnetes Wandler-Gehäuse 100 montiert sein. Zum Visualisieren von Meßgerät intern erzeugten Meßwerten und/oder gegebenenfalls Meßsystem intern generierten Statusmeldungen, wie etwa eine Fehlermeldung oder einen Alarm, vor Ort kann das Meßsystem desweiteren ein zumindest zeitweise mit der Meß- und Steuerelektronik DSV kommunizierendes Anzeige- und Bedienelement HMI aufweisen, wie etwa ein in vorbezeichnetem Elektronikgehäuse 200 hinter einem darin entsprechend vorgesehenen Fenster plaziertes LCD-, OLED- oder TFT-Display sowie eine entsprechende Eingabetastatur und/oder ein Touchscreen. Das elektrische Anschließen des Meßwandlers MW an die Umformerschaltung US kann mittels entsprechender elektrischer Anschlußleitungen und entsprechender Kabeldurchführungen erfolgen. Die Anschlußleitungen können dabei zumindest anteilig als elektrische, zumindest abschnittsweise in von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls lackierten Leiterplatte gebildet sein.

Die vorbezeichneten, mittels Erregeranordnung 41 und daran angeschlossener Antriebselektronik Exc angeregten erzwungenen mechanischen Schwingungen können, wie bei Coriolis-Massendurchfluß-Meßgeräten durchaus üblich, beispielsweise Biegeschwingungen des wenigstens einen Meßrohrs 10 um ein zugehörige Ruhelage sein, wobei als Nutzfrequenz f_{N} beispielsweise eine auch von der Dichte und/oder der Viskosität des im Meßrohr geführten Meßstoffs abhängige momentane Resonanzfrequenz eines lediglich einen einzigen Schwingungsbauch aufweisenden Biegeschwingungsgrundmodes des wenigstens einen Meßrohrs 10 eingestellt sein kann. Infolge von erzwungenen Schwingungen des wenigstens einen Meßrohrs 10, beispielswiese nämlich den vorbezeichneten Biegeschwingungen, können bekanntlich im durch das wenigstens eine Meßrohr strömenden Meßstoff Corioliskräfte generiert werden; dies im besonderen in der Weise, daß jede der vorbezeichneten Nutzsignalkomponenten S1*, S2* der Schwingungsmeßsignale s1 bzw. s2 jeweils eine Meßkomponente S1' bzw. S2' mit einer der Nutzfrequenz f_{N} entsprechenden Signalfrequenz und einem von der Massendurchflußrate m des durch den Meßwandler MW strömenden Meßstoff abhängigen Phasenwinkel aufweist (S1' = f(m), S2'S1' = f(m)), mithin, wie auch in Fig. 4 angedeutet, zwischen der Meßkomponente S1' des Schwingungssignals s1 und der Meßkomponente S2' des Schwingungssignals s2 eine von nämlicher Massendurchflußrate m abhängige Phasendifferenz Δϕ12 (Δϕ12 = f(m)) existiert. Allerdings hat es sich gezeigt, daß bei im ersten Betriebsmode operierender Antriebselektronik Exc bzw. bei in die Erregeranordnung eingespeistem Treibersignal e1 jedes der Schwingungsmeßsignale s1, s2 - wie auch in Fig. 4 angedeutet bzw. aus einer Zusammenschau der Fig. 1 und 4 ersichtlich - außer der vorbezeichneten Meßkomponente S1' bzw. S2' zudem jeweils auch eine dazu frequenzgleiche, gleichwohl unerwünschte Störkomponente S1" bzw. S2" mit jeweils einem von der vorbezeichneten Signalkomponente E1 des Treibersignals e1 abhängigen Phasenwinkel und jeweils einer ebenfalls von nämlicher Signalkomponente E1 abhängigen Amplitude aufweisen kann. Wie auch in Fig. 4 angedeutet, können die Phasenwinkel und/oder die Amplituden der Störkomponenten S1" bzw. S2" jeweils voneinander abweichen. Zudem können nämliche Phasenwinkel und Amplituden im Betrieb, beispielsweise infolge einer sich ändernden Nutzfrequenz und/oder einer sich ändernden Amplitude der Signalkomponente E1 variieren. Aufgrund der in den Schwingungsmeßsignalen s1, s2 bzw. deren Nutzsignalkomponenten S1*, S2* enthaltenen Störkomponente S1" bzw. S2" ist eine bei im ersten Betriebsmode operierender Antriebselektronik Exc zwischen nämlichen Nutzsignalkomponenten S1*, S2* tatsächlich meßbare Phasendifferenz Δϕ12* nicht allein von der Massendurchflußrate m abhängig (Δϕ12* = f(m, E1)) bzw. kann umgekehrt nämliche Phasendifferenz Δϕ12*, wie auch aus Fig. 4 ersichtlich, von der zwischen den Meßkomponenten S1', S2' etablierten Phasendifferenz Δϕ12 signifikant abweichen (Δϕ12* ≠ Δϕ12*).

Zwecks Vermeidung der vorbezeichneten Störkomponente S1", S2" in den Schwingungsmeßsignalen s1, s2 ist die Antriebselektronik Exc des erfindungsgemäßen Coriolis-Massendurchfluß-Meßgeräts daher ferner dafür eingerichtet, im Betrieb desselben gelegentlich auch in einem zweiten Betriebsmode betrieben, beispielsweise nämlich vom vorbezeichneten ersten Betriebsmode I in den zweiten Betriebsmode II versetzt zu werden und in nämlichem zweiten Betriebsmode ein Generieren des elektrischen Treibersignals e1 auszusetzen, derart, daß währenddessen von der Antriebselektronik keine elektrische Leistung in die Erregeranordnung eingespeist wird; dies nämlich z.B. auch in der Weise, daß die bis anhin erzwungenen mechanischen Schwingungen des wenigstens einen Meßrohrs durch freie gedämpfte Schwingungen abgelöst werden.

Darüberhinaus ist die Antriebselektronik und/oder die Meß- und Steuerelektronik DSV ferner dafür eingerichtet, im Betrieb des Coriolis-Massendurchfluß-Meßgeräts sowohl einen Wechsel der Antriebselektronik Exc vom ersten Betriebsmode in den zweiten Betriebsmode zu bewirken bzw. zu zumindest veranlassen, derart, daß das wenigsten eine Meßrohr 10 bei im zweiten Betriebsmode befindlicher Antriebselektronik zumindest während eines - beispielsweise vorgegebenen und/oder anpassbaren - Meßintervalls freie gedämpfte Schwingungen ausführt, als auch während des Meßintervalls die Schwingungsmeßsignale s1, s2 zu empfangen und auszuwerten, nämlich anhand von deren Phasendifferenz Δϕ12* die Massendurchflußrate m repräsentierende Massendurchfluß-Meßwerte X_{M} zu generieren. Das Meßintervall kann dafür beispielsweise so gewählt sein, daß länger als 10 ms, beispielsweise nämlich auch mehr als 100 ms, andauert, und/oder daß mehr als einem Kehrwert (1/f_{N}) der Nutzfrequenz, beispielsweise nämlich auch mehr als einem 5-fachen nämlichen Kehrwerts, entspricht. Wie auch aus Fig. 4 ersichtlich, mag ein vorübergehendes Unterbrechen bzw. Abschalten des Treibersignals e1 zum einen zwar dazu führen, daß eine Amplitude (|S1|, |S2|) jeder der Nutzsignalkomponenten S1, S2 der während des Meßintervalls empfangenen Schwingungsmeßsignale s1, s2 im Vergleich zu den Amplituden (|S*1|, |S*2|) jeder der bei im ersten Betriebsmode I operierender Antriebselektronik Exc erfaßten Nutzsignalkomponenten S1*, S2* deutlich kleiner sein können. Zum anderen führt dieses Abschalten des Treibersignals e1 im besonderen auch dazu, daß die Nutzsignalkomponenten S1, S2 dann aufgrund des Fehlens des Treibersignals e1 die vorbezeichneten Störkomponenten S1", S2" nicht bzw. nicht mehr enthaltenden und dadurch im wesentlichen den Meßkomponenten S1', S2' entsprechen, so daß auch die zwischen den Nutzsignalkomponenten S1, S2 etablierte, meßbare Phasendifferenz Δϕ12* dann der für die Messung der Massendurchflußrate m eigentlich benötigten Phasendifferenz Δϕ12 sehr genau entspricht (Δϕ12* = Δϕ12).

Nach einer weiteren Ausgestaltung der Erfindung ist die Umformerschaltung, beispielsweise nämlich deren Meß- und Steuerelektronik und/oder deren Antriebselektronik, ferner eingerichtet, den Wechsel der Antriebselektronik vom ersten Betriebsmode in den zweiten Betriebsmode zeitgesteuert zu bewirken bzw. zeitgesteuert zu vollziehen, beispielsweise auch derart, daß nämlicher Wechsel bzw. umgekehrt ein Wechsel vom zweiten wieder in den ersten Betriebsmode zyklisch bzw. innerhalb eines vorgegebenen bzw. vorgebbaren Zeitraums Zeit getaktet mehrfach erfolgt. Die Meß- und Steuerelektronik und/oder die Antriebselektronik kann beispielsweise eingerichtet sein, den Wechsel der Antriebselektronik vom ersten Betriebsmode in den zweiten Betriebsmode zyklisch zu vollziehen, derart, daß die die Antriebselektronik innerhalb eines Zyklus mehrfach vom ersten Betriebsmode in den zweiten Betriebsmode wechselt und vice versa und/oder daß die Antriebselektronik innerhalb eines Zyklus überwiegend im ersten Betriebsmode betrieben wird und/oder daß die Antriebselektronik innerhalb eines Zyklus im ersten Betriebsmode mindestens so oft und/oder so lange betrieben wird wie im zweiten Betriebsmode.

Alternativ oder in Ergänzung kann die Umformerschaltung auch eingerichtet sein, den im Betrieb wiederkehrend zu überprüfen, ob der Wechsel der Antriebselektronik vom ersten Betriebsmode in den zweiten Betriebsmode - etwa aufgrund eines inhomogenen Meßstoffs im wenigstens einen Meßrohr - angezeigt bzw. erforderlich ist, und ggf. den Wechsel zu veranlassen. Dafür ist nach einer weiteren Ausgestaltung der Erfindung die Meß- und Steuerelektronik DSV eingerichtet, basierend auf wenigstens einem der - beispielsweise nämlich bei in erstem Betriebsmode I operierender Antriebselektronik Exc erfaßten - Schwingungsmeßsignale s1, s2 und/oder ist die Antriebselektronik Exc eingerichtet, im ersten Betriebsmode I basierend auf wenigstens einer Phasendifferenz zwischen dem Treibersignal e1 und einem der Schwingungsmeßsignale s1, s2 - beispielsweise einer zwischen der vorbezeichneter Signalkomponente E1 des Treibersignals e1 und wenigstens einer der vorbezeichneten Nutzkomponenten S1*, S2* etablierten und/oder einer die vorbezeichnete Phasenregelschleif der Antriebselektronik steuernden Phasendifferenz - festzustellen, ob der im wenigstens einen Meßrohr geführte Meßstoff inhomogen ist. Beispielsweise kann die Antriebselektronik Exc eingerichtet sein, nämliche Phasendifferenz mit einem dafür vorgegebenen, einen zu inhomogenen Meßstoff repräsentierenden Phasendifferenz-Schwellenwert zu vergleichen und im Falle eines Überschreitens des Phasendifferenz-Schwellenwerts den Wechsel in den zweiten Betriebsmode selbsttätig zu vollziehen, ggf. dies hernach auch an die Meß- und Steuerelektronik DSV entsprechend zu vermelden. Weitere mittels der Antriebselektronik oder der Meß- und Steuerelektronik oder auch im Zusammenspiel derselben realisierbare Maßnahmen zur Detektion eines inhomogenen Meßstoffs mittels einer Umformerschaltung der in Rede stehenden Art, beispielsweise nämlich anhand von zeitlichen Änderungen der Nutzfrequenz, der Schwingungsamplitude und/oder einer Dämpfung der Nutzschwingungen etc., sind dem Fachmann an und für sich bekannt und u.a. auch in den eingangs erwähnten US-A 2008/0011101, US-B 63 11 136, US-B 72 96 484, US-B 70 40 181, WO-A 00/19175 bzw. WO-A 01/71291 gezeigt. Alternativ oder in Ergänzung zur vorbezeichneten selbsttätigen Detektion von inhomogenen Meßstoff im wenigstens einen Meßrohr kann die Umformerschaltung ferner auch dafür eingerichtet sein, basierend auf einem daran (von extern) angelegten Steuersignal einen Wechsel der Antriebselektronik vom ersten Betriebsmode in den zweiten Betriebsmode zu bewirken. Das Steuersignal kann beispielsweise von dem vorbezeichneten, an das Coriolis-Massendurchfluß-Meßgerät angeschlosssene Datenverarbeitungssystem erzeugt bzw. ausgesendet sein und beispielsweise eine den Meßstoff als inhomogen vermeldenden Nachricht und/oder ein den Wechsel vom ersten in den zweiten Betriebsmode veranlassendes Steuerkommando an die Umformerschaltung bzw. das damit gebildete Coriolis-Massendurchfluß-Meßgerät übermitteln.

## Patentansprüche

1. Coriolis-Massendurchfluß-Meßgerät, umfassend:
- einen Meßwandler
-- mit wenigstens einem Meßrohr (10),
-- mit einer Erregeranordnung (41)
-- und mit einer Sensoranordnung;
- sowie eine sowohl mit der Erregeranordnung als auch mit der Sensoranordnung elektrisch gekoppelte, insb. mittels wenigstens eines Mikroprozessors gebildete, elektronische Umformerschaltung (US)
-- mit einer Meß- und Steuerelektronik (DSV)
-- und mit einer an die Meß- und Steuerelektronik, insb. elektrisch, angeschlossenen und/oder von der Meß- und Steuerelektronik angesteuerten Antriebselektronik (Exc);
- wobei das Meßrohr eingerichtet ist, einen zumindest zeitweise strömenden fluiden Meßstoff, insb. ein Gas, eine Flüssigkeit oder eine Dispersion, zu führen und währenddessen vibrieren gelassen zu werden;
- wobei die Erregeranordnung eingerichtet ist, dorthin eingespeiste elektrische Leistung in erzwungene mechanische Schwingungen des wenigstens einen Meßrohrs bewirkende mechanische Leistung zu wandeln;
- wobei die Sensoranordnung eingerichtet ist, mechanische Schwingungen des wenigstens einen Meßrohrs zu erfassen und ein zumindest anteilig Schwingungsbewegungen des wenigstens einen Meßrohrs repräsentierendes erstes Schwingungsmeßsignal (s1) sowie wenigstens ein zumindest
anteilig Schwingungsbewegungen des wenigstens einen Meßrohrs repräsentierendes zweites Schwingungsmeßsignal (s2) bereitzustellen, derart, daßnämliche Schwingungsmeßsignale (s1, s2) einer Änderung einer Massendurchflußrate des im Meßrohr geführten
Meßstoffs mit einer Änderung einer Phasendifferenz, nämlich einer Änderung einer Differenz zwischen einem Phasenwinkel (ϕ1) des ersten Schwingungsmeßsignals und einem Phasenwinkel (ϕ2) des zweiten Schwingungsmeßsignals folgen;
- wobei die Antriebselektronik mit der Erregeranordnung elektrisch verbunden und eingerichtet ist,
-- in einem ersten Betriebsmode ein elektrisches Treibersignal (e1) zu generieren und damit elektrische
Leistung in die Erregeranordnung einzuspeisen, derart, daß das wenigstens eine Meßrohr erzwungene mechanische Schwingungen mit wenigstens einer Nutzfrequenz (f_{N}), nämlich einer
durch das elektrische Treibersignal vorgegebenen, insb. einer Resonanzfrequenz des Meßwandlers entsprechenden, Schwingungsfrequenz ausführt,
-- und in einem zweiten Betriebsmode ein Generieren des elektrischen Treibersignals auszusetzen, derart, daß währenddessen von der Antriebselektronik keine elektrische Leistung in die Erregeranordnung eingespeist wird;
- wobei die Meß- und Steuerelektronik mit der Sensoranordnung elektrisch gekoppelt ist;
- wobei die Umformerschaltung, insb. nämlich deren Meß- und Steuerelektronik und/oder deren Antriebselektronik, eingerichtet ist, einen Wechsel der Antriebselektronik vom ersten Betriebsmode in den zweiten Betriebsmode zu bewirken, derart, daß das wenigsten eine Meßrohr bei im zweiten Betriebsmode befindlicher Antriebselektronik zumindest während eines, insb. mehr als einem Kehrwert der Nutzfrequenz entsprechenden und/oder länger als 10 ms andauernden, Meßintervalls freie gedämpfte Schwingungen ausführt;
- und wobei die Meß- und Steuerelektronik eingerichtet ist, während des Meßintervalls die ersten und zweiten Schwingungsmeßsignale zu empfangen und auszuwerten, nämlich anhand von deren Phasendifferenz die Massendurchflußrate repräsentierende Massendurchfluß-Meßwerte (X_{M}) zu generieren.

2. Coriolis-Massendurchfluß-Meßgerät nach einem der vorherigen Ansprüche, wobei die Sensoranordnung zum Erfassen von mechanischen Schwingungen des wenigstens einen Meßrohrs einen das erste Schwingungsmeßsignal bereitstellenden - insb. elektrodynamischen und/oder einlaßseitigen - ersten Schwingungssensor (51) sowie einen das zweite Schwingungsmeßsignal bereitstellenden - insb. elektrodynamischen und/oder auslaßseitigen und/oder und/oder zum ersten Schwingungssensor baugleichen - zweiten Schwingungssensor (52), insb. nämlich außer den ersten und zweiten Schwingungssensoren keinen weiteren Schwingungssensor, aufweist.

3. Coriolis-Massendurchfluß-Meßgerät nach einem der vorherigen Ansprüche, wobei die Erregeranordnung zum Anregen von Schwingungen des wenigstens eine Meßrohrs einen, insb. elektrodynamischen und/oder einzigen, ersten Schwingungserreger (41) aufweist.

4. Coriolis-Massendurchfluß-Meßgerät nach einem der vorherigen Ansprüche, wobei die Meß- und Steuerelektronik einen ersten Analog-zu-Digital-Wandler für das erste Schwingungsmeßsignal sowie einen zweiten Analog-zu-Digital-Wandler für das zweite Schwingungsmeßsignal aufweist.

5. Coriolis-Massendurchfluß-Meßgerät nach einem der vorherigen Ansprüche, wobei die Meß- und Steuerelektronik eingerichtet ist, basierend auf wenigstens einem der, insb. bei im ersten Betriebsmode operierender Antriebselektronik erfaßten, ersten und zweiten Schwingungsmeßsignale, festzustellen, ob der im wenigstens einen Meßrohr geführte Meßstoff inhomogen ist.

6. Coriolis-Massendurchfluß-Meßgerät nach einem der vorherigen Ansprüche, wobei die Antriebselektronik eingerichtet ist, im ersten Betriebsmode basierend auf wenigstens einer Phasendifferenz zwischen dem Treibersignal und einem der ersten und zweiten Schwingungsmeßsignale, festzustellen, ob der im wenigstens einen Meßrohr geführte Meßstoff inhomogen ist.

7. Coriolis-Massendurchfluß-Meßgerät nach einem der vorherigen Ansprüche, wobei die Meß- und Steuerelektronik eingerichtet ist, basierend auf einem an die Umformerschaltung angelegten Steuersignal - insb. nämlich basierend auf einer damit übermittelten Nachricht, daß der im wenigstens einen Meßrohr geführte Meßstoff inhomogen ist, und/oder einem damit übermittelten Steuerkommando - einen Wechsel der Antriebselektronik vom ersten Betriebsmode in den zweiten Betriebsmode zu bewirken.

8. Coriolis-Massendurchfluß-Meßgerät nach einem der vorherigen Ansprüche, wobei die Umformerschaltung, insb. nämlich deren Meß- und Steuerelektronik und/oder deren Antriebselektronik, eingerichtet ist, einen Wechsel der Antriebselektronik vom ersten Betriebsmode in den zweiten Betriebsmode zu bewirken, sobald der im wenigstens einen Meßrohr geführte Meßstoff als inhomogen erkannt und/oder als inhomogen vermeldet ist.

9. Coriolis-Massendurchfluß-Meßgerät nach einem der vorherigen Ansprüche, wobei die Umformerschaltung, insb. nämlich deren Meß- und Steuerelektronik und/oder deren Antriebselektronik, eingerichtet ist, einen Wechsel der Antriebselektronik vom ersten Betriebsmode in den zweiten Betriebsmode zeitgesteuert zu bewirken, insb. derart, daß nämlicher Wechsel zyklisch erfolgt und/oder daß die Antriebselektronik überwiegend im ersten Betriebsmode betrieben wird und/oder daß die Antriebselektronik im ersten Betriebsmode mindestens so lange betrieben wird wie im zweiten Betriebsmode.

10. Coriolis-Massendurchfluß-Meßgerät nach einem der vorherigen Ansprüche, wobei die Umformerschaltung, insb. nämlich deren Meß- und Steuerelektronik und/oder deren Antriebselektronik, eingerichtet ist, einen Wechsel der Antriebselektronik vom ersten Betriebsmode in den zweiten Betriebsmode zyklisch zu vollziehen, insb. derart, daß die die Antriebselektronik innerhalb eines Zyklus mehrfach vom ersten Betriebsmode in den zweiten Betriebsmode wechselt und vice versa und/oder daß die Antriebselektronik innerhalb eines Zyklus überwiegend im ersten Betriebsmode betrieben wird und/oder daß die Antriebselektronik innerhalb eines Zyklus im ersten Betriebsmode mindestens so oft und/oder so lange betrieben wird wie im zweiten Betriebsmode.

11. Verwendung eines Coriolis-Massendurchfluß-Meßgerät nach einem der vorherigen Ansprüche zum Messen und/oder Überwachen eines in einer Rohrleitung zumindest zeitweise strömenden, insb. zumindest zeitweise inhomogenen und/oder zumindest zeitweise 2- oder mehrphasigen, fluiden Meßstoffs, insb. eines Gases, einer Flüssigkeit oder einer Dispersion.

## Claims

1. Coriolis mass flowmeter, comprising:
- a transducer
-- with at least a measuring tube (10),
-- with an exciter arrangement (41)
-- and with a sensor arrangement;
- as well as an electronic transducer circuit (US) electrically coupled to both the exciter arrangement and to the sensor arrangement, particularly formed by at least one microprocessor,
-- with a measurement and control electronics unit (DSV)
-- and with a drive electronics unit (Exc) connected, particularly electrically, to the measurement and control electronics unit and/or controlled by the measurement and control electronics unit;
- wherein the measuring tube is designed to conduct a fluid medium flowing at least temporarily, particularly a gas, a liquid or a dispersion, and to be made to vibrate during this time;
- wherein the exciter arrangement is designed to convert the supplied electrical power into a mechanical power that causes forced mechanical vibrations of the at least one measuring tube;
- wherein the sensor arrangement is designed to measure mechanical vibrations of the at least one measuring tube and to provide a first vibration measuring signal (s1) at least partially representing vibration movements of the at least one measuring tube and at least a second vibration measuring signal (s2) at least partially representing vibration movements of the at least one measuring tube, in such a way that the vibration measuring signals (s1, s2) follow a change in the mass flowrate of the medium conducted in the measuring tube with a change of a phase difference, specifically a change of a difference between a phase angle (ϕ1) of the first vibration measuring signal and a phase angle (ϕ2) of the second vibration measuring signal;
- wherein the drive electronics unit is electrically connected to the exciter arrangement and is designed to
-- generate an electrical driver signal (e1) in a first operating mode and to feed electrical energy into the exciter arrangement in such a way that the at least one measuring tube performs forced mechanical vibrations with at least a useful frequency (f_{N}), specifically a vibration frequency predefined by the electrical driver signal, wherein said useful frequency corresponds particularly to a resonance frequency of the transducer,
-- and to suspend the generation of the electrical driver signal in a second operating mode in such a way that no electrical energy is fed into the exciter arrangement by the drive electronics unit during this time;
- wherein the measurement and control electronics unit is electrically coupled to the sensor arrangement;
- wherein the transducer circuit, particularly its measurement and control electronics unit and/or its drive electronics unit, is designed to change the drive electronics unit from the first operating mode to the second operating mode in such a way that, when the drive electronics unit is in the second operating mode, the at least one measuring tube performs free damped vibrations at least during a measuring interval, corresponding particularly to more than an inverse value of the useful frequency and/or lasting longer than 10 ms;
- and wherein the measurement and control electronics unit is designed to receive and evaluate the first and second vibration measuring signals during the measuring interval, specifically to generate, on the basis of the phase difference of said signals, the mass flow measured values (X_{M}) representing the mass flowrate.

2. Coriolis mass flowmeter as claimed in one of the previous claims, wherein the sensor arrangement designed to measure mechanical vibrations of the at least one measuring tube has a first vibration sensor (51) - particularly electrodynamic and/or located on the input side - providing the first vibration measuring signal as well as a second vibration sensor (52) - particularly electrodynamic and/or located on the output side and/or identical in design to the first vibration sensor - providing the second vibration measuring signal, and particularly does not have any other vibration sensor apart from the first and second vibration sensors.

3. Coriolis mass flowmeter as claimed in one of the previous claims, wherein the exciter arrangement designed to excite vibrations of the at least one measuring tube has a first vibration exciter (41), particularly electrodynamic and/or a single vibration exciter.

4. Coriolis mass flowmeter as claimed in one of the previous claims, wherein the measurement and control electronics unit has a first analog-to-digital converter for the first vibration measuring signal and a second analog-to-digital converter for the second vibration measuring signal.

5. Coriolis mass flowmeter as claimed in one of the previous claims, wherein the measurement and control electronics unit is designed to determine - on the basis of at least one of the first and second measured vibration measuring signals, particularly recorded while the drive electronics unit is operating in the first operating mode - whether the medium conducted in the at least one measuring tube is inhomogeneous.

6. Coriolis mass flowmeter as claimed in one of the previous claims, wherein the drive electronics unit is designed to determine, in the first operating mode and on the basis of at least a phase difference between the driver signal and one of the first and second vibration measuring signals, whether the medium conducted in the at least one measuring tube is inhomogeneous.

7. Coriolis mass flowmeter as claimed in one of the previous claims, wherein the measurement and control electronics unit is designed to cause a change in the drive electronics unit from the first operating mode to the second operating mode on the basis of a control signal applied to the transducer circuit - particularly on the basis of a message transmitted with said signal indicating that the medium conducted in the at least one measuring tube is inhomogeneous, and/or on the basis of a control command transmitted with said signal.

8. Coriolis mass flowmeter as claimed in one of the previous claims, wherein the transducer circuit, particularly its measurement and control electronics unit and/or its drive electronics unit, is designed to cause the drive electronics unit to change from the first operating mode to the second operating mode as soon as the medium conducted in the at least one measuring tube, is recognized as inhomogeneous and/or is reported to be inhomogeneous.

9. Coriolis mass flowmeter as claimed in one of the previous claims, wherein the transducer circuit, particularly its measurement and control electronics unit and/or its drive electronics unit, is designed to cause the drive electronics unit to change from the first operating mode to the second operating mode, in a time-controlled manner, particularly in such a way that said change is performed cyclically and/or that the drive electronics unit is primarily operated in the first operating mode and/or that the drive electronics unit is operated in the first operating mode at least as long as in the second operating mode.

10. Coriolis mass flowmeter as claimed in one of the previous claims, wherein the transducer circuit, particularly its measurement and control electronics unit and/or its drive electronics unit, is designed to cyclically perform a change of the drive electronics unit from the first operating mode to the second operating mode, particularly in such a way that, during a cycle, the drive electronics unit switches several times from the first operating mode to the second operating mode and vice versa and/or that, during a cycle, the drive electronics unit is primarily operated in the first operating mode and/or that, during a cycle, the drive electronics unit is operated in the first operating mode as often and/or as long as in the second operating mode.

11. Use of a Coriolis mass flowmeter as claimed in one of the previous claims, designed to measure and/or monitor a fluid medium, particularly a gas, a liquid or a dispersion, flowing at least temporarily through a pipe, particularly at least temporarily inhomogeneous and/or at least temporarily having two or more phases.

## Revendications

1. Débitmètre massique Coriolis, comprenant :
- un transducteur
-- avec au moins un tube de mesure (10),
-- avec au moins un dispositif d'excitation (41)
-- et avec un arrangement de capteurs ;
- ainsi qu'un circuit convertisseur électronique (US) couplé électriquement aussi bien au dispositif d'excitation qu'à l'arrangement de capteurs, constitué notamment d'au moins un microprocesseur,
-- avec une électronique de mesure et de commande (DSV)
-- et avec une électronique d'entraînement (Exc) raccordée, notamment électriquement, à l'électronique de mesure et de commande et/ou commandée par l'électronique de mesure et de commande ;
- le tube de mesure étant conçu pour guider un produit mesuré s'écoulant au moins temporairement, notamment un gaz, un liquide ou une dispersion, et pour être mis en vibrations pendant ce temps ;
- le dispositif d'excitation étant conçu pour convertir la puissance électrique qui y est injectée en une puissance mécanique provoquant des vibrations mécaniques forcées de l'au moins un tube de mesure ;
- l'arrangement de capteurs étant conçu pour mesurer les vibrations mécaniques de l'au moins un tube de mesure et pour fournir un premier signal de mesure de vibrations (s1) représentant au moins partiellement des mouvements de vibration de l'au moins un tube de mesure ainsi qu'au moins un deuxième signal de mesure de vibrations (s2) représentant au moins partiellement des mouvements de vibration de l'au moins un tube de mesure, de telle sorte que les signaux de mesure de vibrations (s1, s2) suivent une modification d'un débit massique du produit mesuré, lequel est guidé dans le tube de mesure, avec une modification d'une différence de phase, à savoir une modification d'une différence entre un angle de phase (ϕ1) du premier signal de mesure de vibrations et un angle de phase (ϕ2) du deuxième signal de mesure de vibrations ;
- l'électronique d'entraînement étant reliée électriquement au dispositif d'excitation et étant conçue,
-- dans un premier mode de fonctionnement, pour générer un signal de commande électrique (e1) et à injecter ainsi de l'énergie électrique dans le dispositif d'excitation, de telle sorte que l'au moins un tube de mesure exécute des vibrations mécaniques forcées avec au moins une fréquence utile (f_{N}), à savoir une fréquence de vibration prédéfinie par le signal de commande électrique, laquelle fréquence utile correspondant notamment à une fréquence de résonance du transducteur,
-- et, dans un deuxième mode de fonctionnement, pour suspendre une génération du signal de commande électrique, de telle sorte que, pendant ce temps, aucune énergie électrique n'est injectée dans le dispositif d'excitation par l'électronique d'entraînement ;
- l'électronique de mesure et de commande étant couplée électriquement à l'arrangement de capteurs ;
- le circuit convertisseur, notamment son électronique de mesure et de commande et/ou son électronique d'entraînement, étant conçu pour provoquer un passage de l'électronique d'entraînement du premier mode de fonctionnement au deuxième mode de fonctionnement, de telle sorte que l'au moins un tube de mesure, lorsque l'électronique d'entraînement se trouve dans le deuxième mode de fonctionnement, exécute des vibrations libres amorties au moins pendant un intervalle de mesure, correspondant notamment à plus d'une valeur inverse de la fréquence utile et/ou d'une durée supérieure à 10 ms ;
- et l'électronique de mesure et de commande étant conçue pour recevoir et évaluer les premier et deuxième signaux de mesure de vibrations pendant l'intervalle de mesure, à savoir pour générer, sur la base de la différence de phase desdits signaux, des valeurs mesurées de débit massique (X_{M}) représentant le débit massique.

2. Débitmètre massique Coriolis selon l'une des revendications précédentes, pour lequel l'arrangement de capteurs destiné à mesurer les vibrations mécaniques de l'au moins un tube de mesure comporte un premier capteur de vibrations (51) fournissant le premier signal de mesure de vibrations - notamment électrodynamique et/ou côté entrée - ainsi qu'un deuxième capteur de vibrations (52) fournissant le deuxième signal de mesure de vibrations - notamment électrodynamique et/ou côté sortie et/ou de construction identique au premier capteur de vibrations, notamment aucun autre capteur de vibrations en dehors des premier et deuxième capteurs de vibrations.

3. Débitmètre massique Coriolis selon l'une des revendications précédentes, pour lequel le dispositif d'excitation destiné à l'excitation de vibrations de l'au moins un tube de mesure comporte un premier excitateur de vibrations (41), notamment électrodynamique et/ou unique.

4. Débitmètre massique Coriolis selon l'une des revendications précédentes, pour lequel l'électronique de mesure et de commande comporte un premier convertisseur analogique-numérique pour le premier signal de mesure de vibrations ainsi qu'un deuxième convertisseur analogique-numérique pour le deuxième signal de mesure de vibrations.

5. Débitmètre massique Coriolis selon l'une des revendications précédentes, pour lequel l'électronique de mesure et de commande est conçue pour déterminer, sur la base d'au moins l'un des premiers et deuxièmes signaux de mesure de vibrations mesurés, notamment lorsque l'électronique d'entraînement fonctionne dans le premier mode de fonctionnement, si la produit mesuré, guidé dans l'au moins un tube de mesure, n'est pas homogène.

6. Débitmètre massique Coriolis selon l'une des revendications précédentes, pour lequel l'électronique d'entraînement est conçue pour déterminer, dans le premier mode de fonctionnement, sur la base d'au moins une différence de phase entre le signal de commande et l'un des premier et deuxième signaux de mesure de vibrations, si le produit mesuré, guidé dans l'au moins un tube de mesure, n'est pas homogène.

7. Débitmètre massique Coriolis selon l'une des revendications précédentes, pour lequel l'électronique de mesure et de commande est conçue pour provoquer un changement de l'électronique d'entraînement du premier mode de fonctionnement dans le deuxième mode de fonctionnement sur la base d'un signal de commande appliqué au circuit convertisseur - notamment sur la base d'un message transmis avec celui-ci, selon lequel le produit mesuré, guidé dans l'au moins un tube de mesure, n'est pas homogène, et/ou sur la base d'une instruction de commande transmise avec celui-ci.

8. Débitmètre massique Coriolis selon l'une des revendications précédentes, pour lequel le circuit convertisseur, notamment son électronique de mesure et de commande et/ou son électronique d'entraînement, est conçu pour provoquer un changement de l'électronique d'entraînement du premier mode de fonctionnement dans le deuxième mode de fonctionnement dès que le produit mesuré, guidé dans l'au moins un tube de mesure, est reconnu comme non homogène et/ou est signalé comme non homogène.

9. Débitmètre massique Coriolis selon l'une des revendications précédentes, pour lequel le circuit convertisseur, notamment son électronique de mesure et de commande et/ou son électronique d'entraînement, est conçu de manière à provoquer un changement de l'électronique d'entraînement du premier mode de fonctionnement dans le deuxième mode de fonctionnement, d'une manière commandée dans le temps, notamment de telle sorte que ledit changement s'effectue de façon cyclique et/ou que l'électronique d'entraînement fonctionne principalement dans le premier mode de fonctionnement et/ou que l'électronique d'entraînement fonctionne dans le premier mode de fonctionnement au moins aussi longtemps que dans le deuxième mode de fonctionnement.

10. Débitmètre massique Coriolis selon l'une des revendications précédentes, pour lequel le circuit convertisseur, notamment son électronique de mesure et de commande et/ou son électronique d'entraînement, est conçu pour effectuer de manière cyclique un changement de l'électronique d'entraînement du premier mode de fonctionnement dans le deuxième mode de fonctionnement, notamment de telle sorte que l'électronique d'entraînement passe plusieurs fois du premier mode de fonctionnement au deuxième mode de fonctionnement à l'intérieur d'un cycle et vice versa et/ou que l'électronique d'entraînement fonctionne principalement dans le premier mode de fonctionnement à l'intérieur d'un cycle et/ou que l'électronique d'entraînement fonctionne au moins aussi souvent et/ou aussi longtemps dans le premier mode de fonctionnement à l'intérieur d'un cycle que dans le deuxième mode de fonctionnement.

11. Utilisation d'un débitmètre massique Coriolis selon l'une des revendications précédentes, destiné à la mesure et/ou à la surveillance d'un produit fluide, notamment un gaz, un liquide ou une dispersion, s'écoulant au moins temporairement dans une conduite, notamment au moins temporairement inhomogène et/ou présentant au moins temporairement 2 ou plusieurs phases.
